# EUROPEAN PATENT APPLICATION

(11) **EP 3 673 963 A1**
(43) Date of publication of application: **01.07.2020**
(21) Application number: 19000571.0
(22) Date of filing: 18.12.2019
(51) Int. Cl.: A63F 13/00, G06F 3/00, G09B 5/06

(54) **APPARATUS FOR SIMULATED PHYSICAL WORKING CONDITIONS**

(30) Priority: 27.12.2018 PL 42837318
(71) Applicant: Politechnika Slaska, 44-100 Gliwice (PL)
(72) Inventor: Dobrowolska, Malgorzata, 40-540 Katowice (PL); Gzik, Marek, 44-100 Gliwice (PL); Wodarski, Piotr, 43-190 Mikolow (PL); Jedrasiak, Karol, 44-190 Mikolow (PL); Nawrat, Aleksander, 41-807 Zabrze (PL); Szabo, Stanislav, 044 41 Sady Nad Torysou (SK); Koscak, Peter, 04013 Kosice (SK)

(57) **Abstract**

An apparatus for assessing of coordination of attention divisibility and transfer in simulated harsh physical working conditions, designed in a form of a board (4), mobile platform (8), control panel (12), characterized in that consisting four supports (1) allowing by extending the modification of the inclination angle of a frame (2), in the lower part of the apparatus there are motors (3) controlling the location height of the board (4) moving the board alongside the frame (2), on the board (4) there is an area with a display and touch panel (5), to the board (4) attached is a boom (6) the end thereof provided with a camera (7), in front of the board (4), at the side of the boom (6) is located a platform (8) where a mobile floor (11) is placed where located are barriers (9) and frame (10), next to the platform (8) and board (4) is located a position with a panel (12) controlling the apparatus, the apparatus also consists goggles with a place to locate active filters (13) and a switch (14) to change the filter operation mode. The apparatus according to claim 1, characterized in that the board (4) consists position adjustment alongside the height of the frame (2).

## Description

The object of the invention is an apparatus for assessing of coordination of attention divisibility and transfer in simulated harsh physical working conditions.

The apparatus serves to assess coordination of attention divisibility and shift of attention in simulated difficult work conditions occurring at physical work, such as: noise, time pressure, vibrations, dust, smoke, hypoxia, dynamic repositioning, low or high temperature. Additionally, the apparatus allows to simulate the state of intoxication caused by the influence of alcohol or psychoactive substances.

Physical work in so called difficult and hazardous occupations is performed in health hazardous conditions related to three types of factors: physical factors, for example, noise, vibrations, electromagnetic field, radiation; chemical factors, for example, carcinogenic or irritating; biological factors, for example, viruses or fungi.

In relation to the above, in works exposed to the above conditions particular psychophysical ability is required. With respect thereto, it is required, under provisions of occupational medicine, to assess coordination of attention divisibility and shift of attention. It is solely possible with use of apparatus simulating difficult conditions and allowing solving tasks relating to coordination of attention divisibility and shift of attention. Examples of such tasks may be exercises relating to indicating results of basic arithmetic tasks under time pressure and other difficult conditions. In prior art, solutions like Poppelreuter tables have been used to assess attention. However, the apparatus of that type takes account only of time pressure from all other difficult conditions, which makes distinction from the present apparatus.

At present times, the majority of tests assessing coordination of attention divisibility and shift of attention is performed with use of computer apparatus such as, for example, patent "Learning method and system that consider a student's concentration level" no. USOO594453OA or "System and method for educating learning-disabled individuals" no. US006075968A. Such apparatus do not provide complex interaction with the user and do not have such a large range of possible options to simulate work in difficult conditions as the present apparatus. On the market, there are also available solutions with sensors placed on the patient's body, for example, "Quantitative electroencephalographic (qeeg) process and apparatus for assessing attention deficit hyperactivity disorder" no. US00609798OA, which use the EEG to assess attention divisibility. Such solutions differ from the research methodology accepted for the present apparatus, they are based on entirely different measurement technology.

A solution similar to the present apparatus is the system "Evoked response testing system publication classification for neurological disorders" no. US 20070191727A1, which allows simulation of disorders during testing with use of the projection system located on the head of the participant. Such a solution uses, however, entirely different projection method and is limited to only visual disorders. The present apparatus provides also the possibility to incline the participant on the platform and the possibility to move the board with the panel where the introduction of data takes place during testing.

There are no apparatus for assessment of coordination of attention divisibility and shift of attention in simulated difficult conditions in physical work with plurality of senses simultaneously stimulated during task performance. The majority of prior art uses only introduction of visual disorders or performance of assessment with use of a computer. The present solution allows performance of plurality of tests during one assessment session, allows introduction of both visual and mechanical difficulties. The solution contributes to reduction of time of assessment in comparison with currently used research methods. The apparatus combines the advantages and functionalities of plurality of the research methods being performed into one system, which reduces costs to be incurred in case of providing equipment for a psychological testing office.

The subject of the invention is an apparatus for assessing of coordination of attention divisibility and transfer in simulated harsh physical working conditions, including the following elements: mobile board, goggles, mobile platform with 3 degrees of freedom and safety barrier, and operator's position.

The mobile board is an apparatus allowing simulation of the following difficult work conditions: earthquake and subsidence by making the apparatus vibrate with use of electric motors, work in noise by the use of loudspeakers, work in dynamically changing environment by moving the mobile platform located on the 2 m rail with the use of the electric motor. The mobile board allows introduction of data in the following ways: by touching the button on the board and by introducing the indications of the laser IR indicator, not visible to the participant, due to the use of infrared camera following the board and located on the boom.

The goggles allow simulation of the following difficult working conditions at the position: fog by using of a physical filter blurring into milk hues of low semi-transparency, dust by using a physical filter reducing visibility by the use of fine particle dispersion, smoke by using use a physical filter blurring into dark hues of low semi-transparency, hypoxia effect by using a physical filter introducing so called light flashes onto the image, hypothermia effect by using a physical filter to blur and darken, heat stroke effect by using a physical filter displaying flashes of light, light-colour spots and light effects on the image. Such effects relate to indications in commonly available results of medical research for simulation of work of individuals in difficult work conditions. The switchover between the difficult condition simulation modes is by turning the rotary knob mounted on the goggles. The goggles are also provided with a microphone allowing input of human speech in order to give response by the participant.

The mobile platform with 3 degrees of freedom and safety barrier allows simulation of difficult conditions in a form of vibrations and earthquakes by making the platform vibrate with the use of electric motors. It is also possible to attach the user with a belt to the safety barrier in order to secure safety.

The operator's position allows selection of tasks to be solved on the mobile board.

The assessment with the use of the apparatus for assessment of coordination of attention divisibility and shift of attention in simulated difficult conditions in physical work consists in placing the participant on the mobile platform. The participant holds to the barriers or is attached by the safety belt. The participant puts on the goggles simulating difficult physical conditions of work and does the tasks on the mobile board. The course of the task is controlled by the operator from the control panel or by IR laser indications. The participant does the task touching the touch panel of the board.

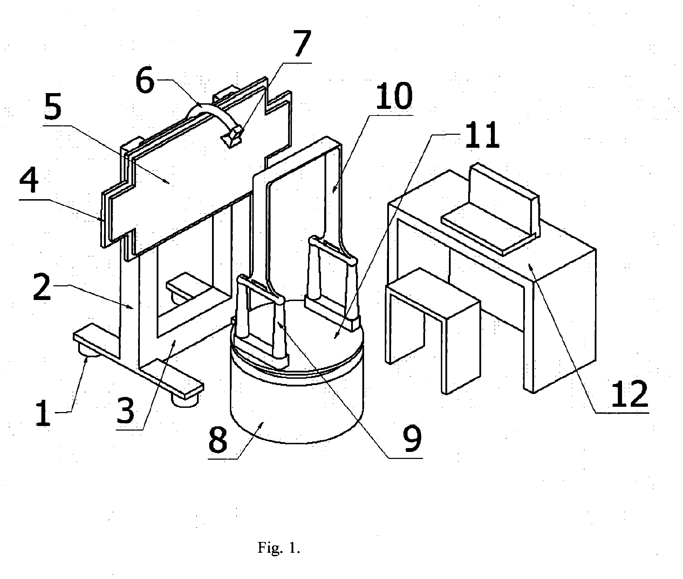

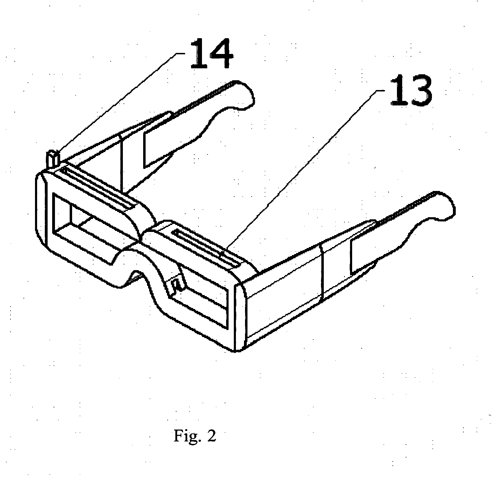

The subject of the invention is presented in the preferred embodiment in the drawings where Fig. 1 shows an axonometric view of the position and Fig. 2 shows an axonometric view of the 3D goggles.

The present solution according to Figure 1 consists four supports 1 allowing by shifting the modification of the inclination angle of a frame 2. In the lower part of the apparatus there are motors 3 controlling the location height of a board 4 moving the board alongside the frame 2. On the board 4 there is an area with a display and touch panel 5. To the board 4 attached is a boom 6 the end thereof provided with a camera 7. In front of the board 4, at the side of the boom 6 is located a platform 8. On the platform 8 there is a mobile floor 11 where located are barriers 9 and frame 10 allowing fastening of safety belts or a harness suspending the user. Next to the platform 8 and board 4 is located a position with a panel 12 controlling the apparatus. The apparatus also consists goggles Fig. 2 with a place to locate active filters 13 and a switch 14 to change the filter operation mode.

The assessment is performed by placing the user on the platform 8 on the mobile floor 11. The participant is secured with the belt fastened to the frame 10 and holds to the rail 9. The task is displayed on the display with the touch panel 5. The participant touches the panel 5 when solving the task. The difficulty in solving the task is mobility of the board 4 alongside the element 2 and the active filter in the goggles 13 simulating difficult working conditions. Controlling the board 4 and display 5 is from the level of the control panel 12.

## Claims

1. An apparatus for assessing of coordination of attention divisibility and transfer in simulated harsh physical working conditions designed in a form of a board (4), mobile platform (8), control panel (12), **characterized in that** consisting four supports (1) allowing by extending the modification of the inclination angle of a frame (2), in the lower part of the apparatus there are motors (3) controlling the location height of the board (4) moving the board alongside the frame (2), on the board (4) there is an area with a display and touch panel (5), to the board (4) attached is a boom (6) the end thereof provided with a camera (7), in front of the board (4), at the side of the boom (6) is located a platform (8) where a mobile floor (11) is placed where located are barriers (9) and frame (10), next to the platform (8) and board (4) is located a position with a panel (12) controlling the apparatus, the apparatus also consists goggles with a place to locate active filters (13) and a switch (14) to change the filter operation mode.

2. The apparatus according to claim 1, **characterised in that** the board (4) consists position adjustment alongside the height of the frame (2).

3. The apparatus according to claim 1, **characterised in that** the shape of the touch panel (5) is the same as the shape of the touch panel of the board (4), corresponding lengths of the sides of the touch panel (5) are smaller than corresponding thereto lengths of the sides of the board (4), the ratio of the lengths of two adjacent sides of the touch panel (5) is equal to the ratio of the lengths of the sides corresponding thereto of the board (4).

4. The apparatus according to claim 1, **characterised in that** the motor to control the height of the board (4) is located in the lower part of the frame (3).

5. The apparatus according to claim 1, **characterised in that** the supports (1) are provided with the possibility to modify the height in the range from 5 cm to 15 cm.

6. The apparatus according to claim 1, **characterised in that** the floor (11) is provided with at least two degrees of freedom of the movement.

7. The apparatus according to claim 1, **characterised in that** the floor (11) is provided with the control of the inclination angle to the floor where located is the platform (8) in the range from 0 to 30 degrees.

8. The apparatus according to claim 1, **characterised in that** the barriers (9) are located in the parallel to each other and moved away planes.

9. The apparatus according to claim 1, **characterised in that** the goggles with the active filters are provided in the upper part with the openings (13) to locate the filters.

10. The apparatus according to claim 1, **characterised in that** the goggles with the active filters are provided with precisely one press button (14) to modify the parameters of the filter, located on one of the side of the openings (13).
